# EUROPEAN PATENT APPLICATION

(11) **EP 1 197 481 A2**
(43) Date of publication of application: **17.04.2002**
(21) Application number: 01203883.2
(22) Date of filing: 15.10.2001
(51) Int. Cl.: C05F 3/00, C05F 3/06

(54) **Method and installation for drying manure**

(30) Priority: 17.10.2000 NL 1016417
(71) Applicant: Wittendorp, Alexander Laurentius, 7891 NN Klazienaveen (NL)
(72) Inventor: Wittendorp, Alexander Laurentius, 7891 NN Klazienaveen (NL)

(57) **Abstract**

The invention relates to a method and an arrangement for the fermentation and subsequently the drying of biomass, like manure. By combining both processes, an important part of the biomass can be converted to a high-grade, sterile product with a substantially neutral smell, while moreover electricity is produced which can be delivered to the electric mains.

## Description

The invention relates to a method for drying biomass, like manure, in the process of which a dry fraction and a liquid fraction of the biomass are separated, after which the dry fraction is led through a drying system. This method is known and is widely used, especially for reducing the costs of transportation. For the liquid fraction, the processing to a dry product that can be sold is cumbersome and in addition to that it needs much energy.

One of the aims of the present invention is to reduce the amount of the dry fraction in a flow of biomass without any additional cost from an energy point of view. The method is characterized in that the biomass is subjected to a process of fermentation before being separated.

During the process of fermentation, the amount of dry fraction is reduced by 30-70%, as a result of which less dry fraction is finally led towards the drying system. Moreover, this dry fraction is much more rich in minerals and is therefore a better fertilizer. An important additional advantage of the inventive method is that during the process of fermentation, amongst others, water of condensation and high-grade biogas are produced. The water of condensation can easily be collected and substantially without further processing be disposed of, which means that effectively water is abstracted from the flow of biomass. Another additional advantage of the inventive method is that during the fermentation process part of the odorous substances present in the biomass, like volatile fatty acids, is decomposed, as a result of which less stench is produced during drying and a less smelly dry saleable product is obtained.

A very favourable realization of the inventive method is characterized in that biogas, released during the process of fermentation, is used for generating electricity and heat, which heat is at least partly used for heating air which is led through the drying system. Thanks to the large amount of heat that becomes available in this way, it is even possible to moisten the dried fraction repeatedly with part of the liquid fraction and to dry it again, in such a manner that finally the entire flow of biomass has been transformed into an dry saleable product which is rich in minerals.

In a further favourable realization of the inventive method, the electricity is at least partly used for driving conveying means in the drying system, such that practically no electricity generated by burning fossil fuels is needed. As a rule it is even possible to deliver an excess of electricity, produced in this manner as so called green electricity to the electric mains.

A further very favourable realisation of the inventive method takes advantage of the fact that an excess of heat is available. It is characterized in that heat is moreover used for sterilizing dried biomass, after it has left the drying system. In this way it is possible to process biomass and to sell the resulting product, even if the manure producing farm is for example struck by a disease. It also simplifies the export of the dry product and it enlarges the potential market.

A further favourable realization of the inventive method is characterized in that air, released from the drying system is led through an air washer, as a result of which substantially no ammonia and odorous substances are released. Preferably, water of condensation, obtained during the process of fermentation is used as washing water in the air washer.

The invention also relates to a system for drying biomass, like manure. It is well known to dry biomass in a drying system, preferably by using the relatively warm air which is extracted from a sty for the purpose of ventilation. As only a limited amount of warmth is generated in the sty, only the dry fraction of the biomass can be further dried by it, whereas the final product may still contain relatively much water. The inventive system substantially obviates these disadvantages and is characterized in that the system is a combination of at least a fermentation arrangement, a generator for generating electricity at least substantially driven by biogas and a drying tunnel. During fermentation the amount of dry mass is reduced and moreover water is extracted from the biomass. Moreover, biogas is generated during the fermentation process which can be used to generate electricity, while the large amount of residual heat which is inevitable generated as a by-product when electricity is generated, can be used advantageously for drying the entire flow of biomass, released by the fermentation arrangement. The electric energy can be used for feeding the system itself, while excess energy may be supplied to the electric mains as so called green electricity.

A favourable embodiment of the inventive system is characterized in that the fermentation arrangement comprises a silo, on all sides provided with a thermal insulating wall, on a top covered with a gas permeable thermal insulating plate and a gastight, elastic membrane. The thermal insulating plate is preferably made of wood, possibly provided with perforations, because it turns out that wood is a good culture medium for sulphur digesting micro-organisms, which virtually completely remove hydrogen sulphide set free during the fermentation process, from the passing flow of biogas.

A further favourable embodiment of the inventive system is characterized in that the silo moreover comprises a gutter for collecting water of condensation, originating from an inside of the membrane. Water, obtained in this manner can be disposed of, which results in a reduced amount of more concentrated biomass. Moreover, the water can be used advantageously in an air washer which preferably forms part of the system. The air washer as such is known in the art for washing the air leaving the sty or shed or the drying system, therewith preventing ammonia and odorous substances from being released in the atmosphere.

Another favourable embodiment of the inventive system is characterized in that the silo is provided with separate entries for solid biomass and for liquid biomass. This is an important energy saving measure, as it is no longer necessary now to mix liquid biomass and solid biomass beforehand in order to get a product that can be pumped. Instead, the liquid biomass is pumped directly into the silo, while the solid biomass, and possibly other organic waste like green maize, broom grass etc, is pushed into the silo with the aid of a hydraulically driven filling press, combined wit a hydraulically driven valve, in such a way that substantially no air can leak into the silo. This is of great importance, as the fermentation process is of an anaerobic nature and oxygen would interfere with this process.

One could summarize the inventive system by saying that without the use of fossil fuels a flow of biomass can be converted into a dry, marketable product and that moreover so called green electricity is produced.

The invention will now be further explained with a reference to the following figures, in which:
- Fig. 1: represents in a block diagram a possible system according to the invention;
- Fig. 2: schematically represents in cross-section a fermentation arrangement;
- Fig. 3: represents a possible embodiment of a filling press.

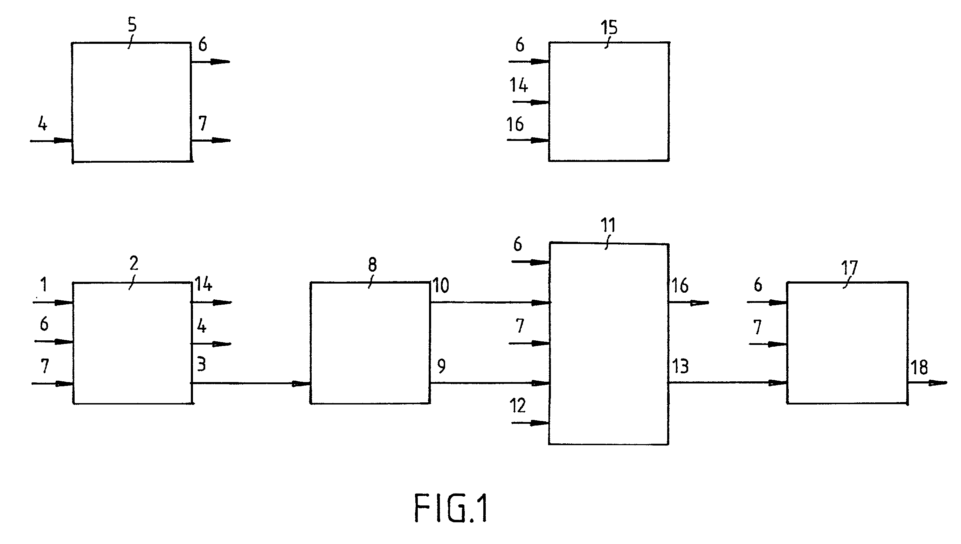

Fig. 1 represents in a block diagram a possible system according to the invention, in which solid biomass, liquid biomass or organic waste 1 is supplied to a fermentation silo 2. In fermentation silo 2 a continuous fermentation process takes place, in which in a period of time of about 20-60 days the organic material is fermented. Organic material which no longer can take part in the fermentation process will sink to the bottom of silo 2 and will be extracted periodically as completely fermented biomass 3. Moreover, fermentation silo 2 produces methane gas 4, which is supplied to an electricity generator 5, as such well known in the art, which consists basically of a combustion engine with a generator coupled to it. Electricity generator 5 produces, apart from electric energy 6, also heat 7 in the form of hot air, steam or hot water. The fermented biomass 3 is preferably supplied to a separator press 8, as such well known in the art, which separates the fermented biomass 3 in a thick fraction 9 and a liquid fraction 10. Thick fraction 9 is supplied to a drying system 11, as such well known in the art, which generally consists of a porous conveyer belt onto which the thick fraction 9 is spreaded out in a granular form. Air 12, preferably originating from the sties or sheds in which the manure producing animals are housed is supplied to drying system 11, because this air is relatively warm and fit for absorbing moisture. Moreover, heat 7 emanating from electricity generator 5 is supplied to drying system 11. This can be in the form of heated air, but it is also possible to supply drying system 11 with heat exchangers which are heated by steam or hot water. As soon as the thick fraction on the conveyer belt is sufficiently dry, part of the liquid fraction is sprayed onto the granules on the conveyer belt repeatedly, until the entire liquid fraction is used up. This results in a product with about 85% dry matter 13, which is very rich in minerals and for which buyers can easily be found.

It is also possible, if desired, to spray part of the content of fermentation silo 2 directly onto the dry product, present on the transportation belt. It is not necessary then to treat this part in separator press 8.

Fermentation silo 2 also produces relatively clean water 14, which can be collected in the form of water of condensation. This condensation may, dependent upon amongst others the outside temperature, amount to 10-30% of the water present in the biomass supplied to silo 2. Water 14 is supplied to an air washer 15, as such well known in the art. In air washer 15, air 16 originating from drying system 11 is washed before it is discharged. In this way the emission of ammonia and stench is reduced to substantially zero level.

Dry matter 13 is preferably supplied to a sterilizer 17, as such well known in the art, for example designed as a tunnel in which a transportation belt is running and in which the dry matter is heated, using the electricity 6 and the heat 7 delivered by electricity generator 5, preferably to above one hundred degrees of Celsius, such that the final product 18 can leave the system sterile and practically dry.

By-products consist of electric energy 6, which may be delivered to the electric mains in a way well known in the art, and possibly heat, which may be used for heating the farm or the sheds. It must be noted however, that part of the electric energy and the heat is led to the fermentation arrangement 2, for example to power a stirrer and to keep the biomass on a prescribed temperature.

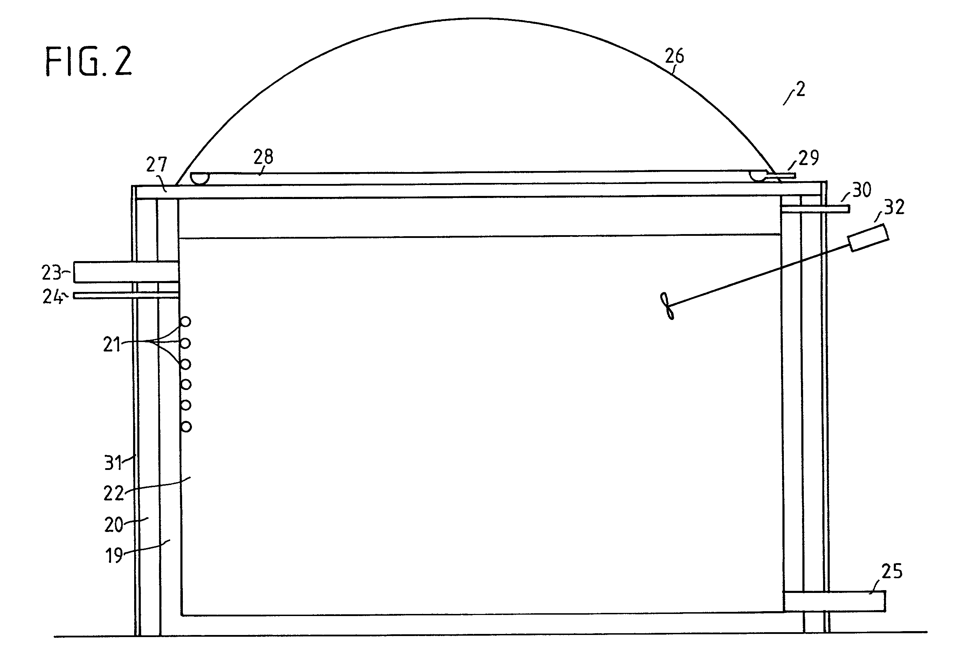

Fig. 2 schematically represents in cross-section a fermentation arrangement 2, consisting of a silo 19 made of concrete, which is surrounded by a layer of insulating material 20. Inside, a system of tubes 21 is installed onto the wall of the concrete silo 19, through which warm water can be led, originating from electricity generator 5. In this way, the liquid biomass in silo 19 is kept at a temperature of 30-42 degrees of Celsius or at a temperature of 50-60 degrees of Celsius, dependent upon the type of micro-organisms used for the fermentation process. Solid biomass is supplied to silo 19 via a supply opening 23 with the aid of a hydraulic press, not shown and as such well known in the art. The supplied biomass remains on top of silo 19 during the fermentation process, because of the production of methane gas which provides buoyancy to the biomass. Substance that cannot be fermented any further will sink to the bottom and may leave silo 19 via an exit 25. On top, silo 19 is sealed by a membrane 26 of for example a polyurethane foil, which will bulge as a result of the production of methane gas. In order to prevent the loss of heat on the top side of silo 19, it is covered by a planking 27, which is sufficiently porous for letting pass the methane gas. In planking 27, sulphur digesting micro-organisms develop, which convert hydrogen sulphide which is present in the methane gas to harmless sulphur. Moreover a gutter 28 is attached on planking 27, in which water is collected which appears on the inside of membrane 26 as a condensate and which can be drained away via an outlet 29 for further use. Methane gas is drained away via an outlet 30 for further use.

The outside of silo 19 covered with a synthetic coating 31 in order to protect insulating layer 20 and to keep it dry. Moreover, silo 19 is provided with at least one agitator 32, as such well known in the art, to homogenize the fermenting biomass.

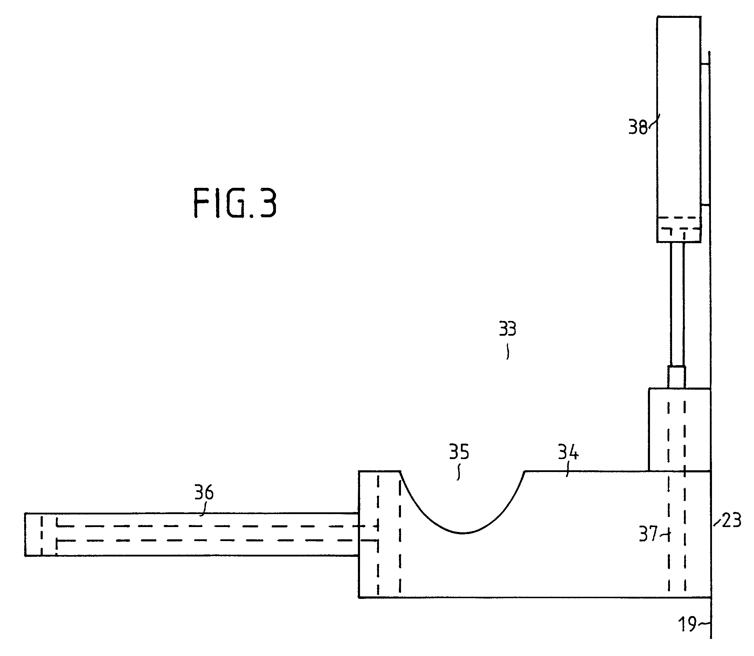

Fig. 3 represents a possible embodiment of a filling press 33, with the help of which relatively solid biomass can be pressed into supply opening 23, without the possibility for air to penetrate into silo 19. Filling press 33 consists of a filling tube 34, with an opening 35 in which biomass can be dumped. As soon as filling tube is filled to a desired level a hydraulic cylinder 36 is energized, which pushes the biomass against a valve 37, such that substantially all air is squeezed out. Next a second hydraulic cylinder 38 is energized, which opens valve 37, after which cylinder 36 pushes the biomass into silo 19. The filling operation is finished by pushing valve 37 downward with the aid of cylinder 36 and by returning cylinder 36 to its original position.

## Claims

1. Method for drying biomass, like manure, in the process of which a dry fraction and a liquid fraction of the biomass are separated, after which the dry fraction is led through a drying system, **characterized in that** the biomass is subjected to a process of fermentation before being separated.

2. Method according to claim 1, **characterized in that** biogas, released during the process of fermentation, is used for generating electricity and heat, which heat is at least partly used for heating air which is led through the drying system.

3. Method according to claim 2, **characterized in that** the electricity is at least partly used for driving conveying means in the drying system.

4. Method according to claim 2, **characterized in that** heat is moreover used for sterilizing dried biomass.

5. Method according to claim 1, **characterized in that** air, released from the drying system is led through an air washer.

6. Method according to claim 5, **characterized in that** water of condensation, obtained during the process of fermentation is used as washing water in the air washer.

7. System for drying biomass, **characterized in that** the system is a combination of at least a fermentation arrangement, a generator for generating electricity at least substantially driven by biogas and a drying tunnel.

8. System according to claim 7, **characterized in that** the fermentation arrangement comprises a silo, on all sides provided with a thermal insulating wall, on a top covered with a gas permeable thermal insulating plate and by a gastight, elastic membrane.

9. System according to claim 8, **characterized in that** the silo moreover comprises a gutter for collecting water of condensation, originating from an inside of the membrane.

10. System according to claim 8, **characterized in that** the silo is provided with separate entries for solid biomass and for liquid biomass.

11. System according to claim 10, **characterized in that** the entry for solid biomass is provided with a filling press.

12. System according to claim 11, **characterized in that** the filling press comprises a hydraulically driven press and a hydraulically driven valve.
